# EUROPÄISCHE PATENTSCHRIFT

(11) **EP 1 171 942 B1**
(45) Veröffentlichungstag und Bekanntmachung des Hinweises auf die Patenterteilung: **13.10.2004**
(21) Anmeldenummer: 01915018.4
(22) Anmeldetag: 20.02.2001
(51) Int. Cl.: H02K 5/14, H02K 5/15, H02K 15/14

(54) **VERFAHREN ZUR HERSTELLUNG EINES LAGERSCHILDS FÜR EINE KOMMUTATORMASCHINE UND MIT SOLCH EINEM VERFAHREN HERGESTELLTES LAGERSCHILD**
METHOD FOR PRODUCING AN END SHIELD FOR A COMMUTATOR MACHINE AND AN END SHIELD MANUFACTURED BY SUCH A METHOD
PROCEDE DE REALISATION D'UN FLASQUE POUR MOTEUR A COMMUTATEUR ET FLASQUE FABRIQUE SUIVANT CETTE METHODE

(30) Priorität: 22.02.2000 DE 10007905
(43) Veröffentlichungstag der Anmeldung: 16.01.2002
(73) Patentinhaber: ROBERT BOSCH GMBH, 70442 Stuttgart (DE)
(72) Erfinder: WINKLER, Wolfgang, 77746 Schutterwald (DE); GROSS, Gerhard, 77886 Lauf (DE); NITZSCHE, Hartmut, 77815 Buehl (DE); MERSCHROTH, Bernhard, 77833 Ottersweier (DE); EWERT, Andreas, 77839 Lichtenau (DE)
(86) Internationale Anmeldenummer: PCT/DE2001/000636
(87) Internationale Veröffentlichungsnummer: WO 2001/063728

(56) Entgegenhaltungen:
- US-A- 4 673 836
- US-A- 4 673 837
- US-A- 5 821 663
- US-A- 5 969 458
- US-A- 5 973 433

## Beschreibung

### Stand der Technik

Die Erfindung geht aus von einem Verfahren zur Herstellung eines Lagerschilds für eine Kommutatormaschine nach der Gattung der Ansprüch 1 oder 2.

Aus der DE 42 43 716 A1 ist ein Lagerschild mit einem Bürstenträger bekannt. Der Bürstenträger wird in einem Spritzgiessverfahren auf das Lagerschild aus Metall aufgebracht. Anschlusselemente für einen äusseren Stecker oder Anschlusselemente für eine Drosselspule müssen in einem separaten Arbeitsgang hergestellt und auf den Bürstenträger montiert werden.

Die US 4,673,836 beschreibt ein Lagerschild aus Metall für eine Kommutatormaschine, dass folgende Merkmale hat:
i) das Lagerschild schließt ein Gehäuse der Kommutatormaschine stirnseitig ab,
ii) das Lagerschild bildet für ein Lager einer Rotorwelle der Kommutatormaschine eine Lageraufnahme,
iii) das Lagerschild ist mit einem Bürstenträger verbunden, wobei der Bürstenträger folgende Merkmale hat:
   - der Bürstenträger ist in zusammengebauten Zustand von Lagerschild und Gehäuse auf einer Innenfläche des Lagerschild elektrisch isolierend angeordnet und
   - der Bürstenträger hat Führungsschächte zu radial verschiebbaren Aufnahmen jeweils einer Kommutatorbürste.

### Vorteile der Erfindung

Das erfindungsgemässe Verfahren zur Herstellung eines Lagerschilds mit den kennzeichnenden Merkmalen der Ansprüche 1 oder 2 haben demgegenüber den Vorteil, dass auf einfache Art und Weise eine Anzahl der zu montierenden Teile reduziert und das Herstellungsverfahren vereinfacht wird.

Durch die in den abhängigen Ansprüchen aufgeführten Massnahmen bzw. Verfahrensschritte sind vorteilhafte Weiterbildungen und Verbesserungen des in den Ansprüchen 1 oder 2 genannten Verfahrens zur Herstellung des Lagerschilds möglich.

Es ist vorteilhaft, das zumindest eine Anschlusselement einteilig mit dem Lagerschild auszuführen, da dadurch eine Anzahl der zu montierenden Teile reduziert wird.

Um eine schnelle und kostengünstige Herstellung zu gewährleisten, ist es vorteilhaft, den Bürstenträger auf das Lagerschild zu spritzen oder zu giessen, da dadurch das Herstellungsverfahren vereinfacht wird.

Weiterhin vorteilhaft ist es, einen elektrischen Anschlussstecker für die äusseren elektrischen Anschlüsse mit dem Bürstenträger einteilig auszuführen, da dadurch eine Anzahl der zu montierenden Teile reduziert und das Herstellungsverfahren vereinfacht wird.

Da im Bereich der Führungsschächte für die Bürsten erhöhte Temperaturen während des Betriebes entstehen, ist es vorteilhaft, diese Führungsschächte aus einem hitzebeständigeren Material auszuführen, da dadurch die Lebensdauer eines Bürstenhalters erhöht und die Zuverlässigkeit einer Kommutatormaschine erhöht wird.

Um ein geringes Gewicht und eine vereinfachte Herstellung des Bürstenträgers zu erhalten, ist es vorteilhaft, Kunststoff zu verwenden.

Vorteile in der Herstellung des Lagerschilds mit dem Bürstenträger ergeben sich dadurch, dass ein Anschlussstecker in einem Arbeitsgang mit dem Bürstenträger hergestellt wird.

### Zeichnungen

Ein Ausführungsbeispiel der Erfindung ist in den Zeichnungen vereinfacht dargestellt und in der nachfolgenden Beschreibung näher erläutert. Es zeigen die
Figuren 1a, b Herstellungsschritte eines Lagerschilds und Figur 1c ein erfindungsgemässes Lagerschild mit Anschlusselementen,
Figur 2 ein erfindungsgemässes Lagerschild mit Anschlusselementen in einem weiteren Herstellungsschritt,
Figur 3 ein erfindungsgemässes Lagerschild mit einem Bürstenträger und einem Teil eines Motorgehäuses in einem axialen Querschnitt,
Figur 4a zeigt eine Draufsicht auf einen Bürstenhalter und
Figur 4b einen Schnitt entlang der Linie B-B der Figur 4a.

### Beschreibung des Ausführungsbeispiels

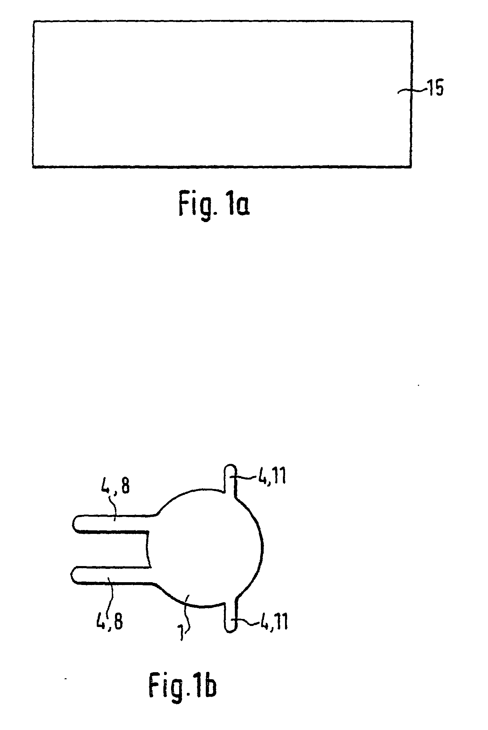

Eine Kommutatormaschine wird beispielsweise als ein Elektromotor verwendet. Der Elektromotor besteht u.a. aus einem Motorgehäuse, einem Stator, einem Rotor mit Kommutator, Bürstenhalter mit Bürsten zwecks Stromzuführung auf den Kommutator und wenigstens einem Lagerschild, welches das Motorgehäuse stirnseitig abschliesst und bspw. eine Lageraufnahme für ein Lager einer Rotorwelle beinhaltet.
Das Lagerschild 1 wird in einem ersten Herstellungsschritt aus einem Blech 15 (Fig. la) oder einem Metallband ausgestanzt oder ausgeschnitten, so dass es bspw. die in Figur 1b gezeigte Form erhält.

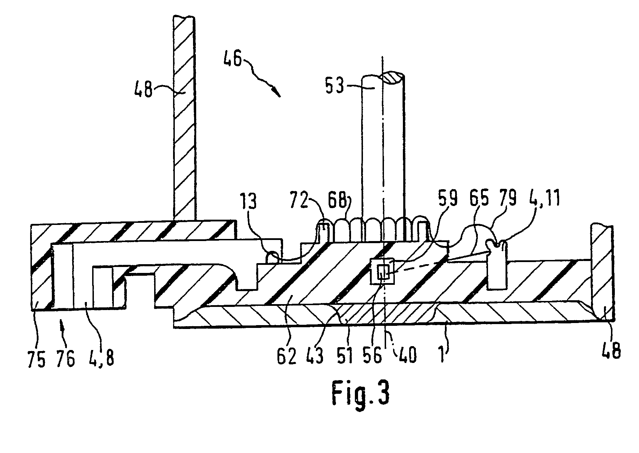

Figur 1b zeigt in einer Rohform, die eben ausgeführt ist, das Lagerschild 1 aus Metall, das in diesem Beispiel rund ist und bspw. vier bspw. längliche Vorsprünge für elektrisch leitende Anschlusselemente 4 hat, die sich bspw. in der Zeichnungsebene erstrecken: bspw. zwei Steckeranschlusselemente 8 und bspw. zwei Drossel-Bürstenanschlusselemente 11. Es können weniger oder mehr Anschlusselemente 4 vorhanden sein. Die Steckeranschlusselemente 8 dienen als eine elektrische Verbindung zwischen einem Kommutator des Elektromotors und einem äusseren Anschlussstecker. Äussere elektrische Anschlüsse sind bspw. eine Steckverbindung, wie in den Figuren dargestellt, oder sind Anschlüsse für eine feste Kabelverbindung hergestellt durch Löten oder Schweissen. Die Drossel-Bürstenanschlusselemente 11 dienen als elektrisches Verbindungsstück zwischen einer elektrischen Drossel 68 (Fig. 3) und der Bürstenstromzuführung.

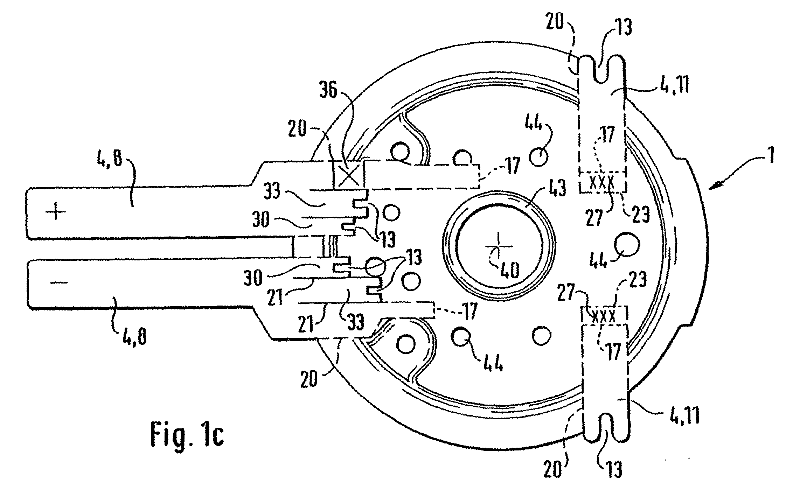

Figur 1c zeigt das Lagerschild 1 in einem weiteren Herstellungsschritt. Entlang je einer Trennlinie 20 (in Fig. 1c gestrichelt gezeichnet) werden die Drossel-Bürstenanschlusselemente 11 in Richtung ihrer axialen Erstreckung in der Zeichnungsebene von dem Lagerschild 1 getrennt, so dass sie nur noch entlang einer Verbindungslinie 23 (in Fig. 1c strich-punktiert gezeichnet) mit dem Lagerschild 1 verbunden sind.
Auch die Steckeranschlusselemente 8 werden entlang einer Trennlinie 20 (in Fig. 1c gestrichelt gezeichnet) in Richtung ihrer axialen Erstreckung in der Zeichnungsebene von dem Lagerschild 1 getrennt bzw. es werden durch weitere Trennlinien 21 beispielsweise erste und zweite Halteabschnitte 30, 33 an jedem Steckeranschlusselement 8 gebildet. Dann wird der Rohling des Lagerschilds 1 bspw. in eine tellerartige Form gepresst und eventuell werden weitere Bohrungen oder Löcher hergestellt. Diese Reihenfolge der Herstellungsschritte ist nicht zwingend notwendig.

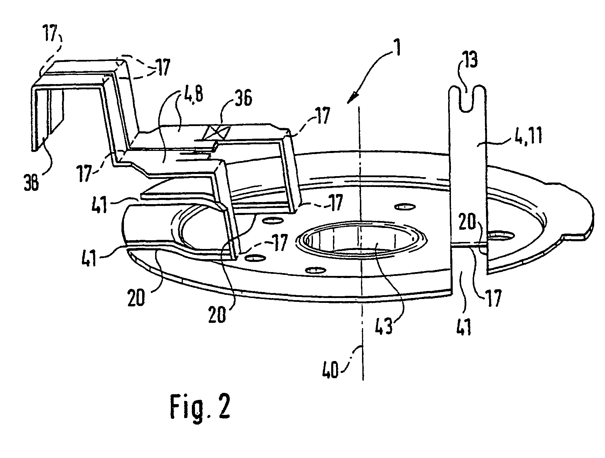

Entlang einer Biegelinie 17 (in Fig. 1c punktiert gezeichnet) werden die Drossel-Bürstenanschlusselemente 11 in einem weiteren Fertigungsschritt bspw. in ihre endgültige Lage etwa senkrecht zur Ebene des Lagerschilds 1 und eventuell in eine vorbestimmte Form gebogen. Die Drossel-Bürstenanschlusselemente 11 können bspw. auch als separate Teile mit dem Lagerschild 1 bspw. durch Löten verbunden werden. Die Steckeranschlusselemente 8 werden ebenfalls entlang einer Biegelinie 17 (hier punktiert gezeichnet) bspw. in ihre endgültige Form geformt (Fig. 2). Auch die Halteabschnitte 30, 33 der Steckeranschlusselemente 8 werden bspw. in ihre endgültige Form gebogen, z.B. die Halteabschnitte 30 senkrecht zur Ebene des Lagerschilds 1 und in Richtung des Lagerschilds 1 und die Halteabschnitte 33 in die entgegengesetzte Richtung.
Die Steckeranschlusselemente 8 können bspw. auch als separate Teile mit dem Lagerschild 1 bspw. durch Löten verbunden werden. Die ersten Halteabschnitte 30 dienen zur elektrischen Verbindung eines Kondensators zwischen den beiden Steckeranschlusselementen 8. Die zweiten Halteabschnitte 33 dienen zur elektrischen Verbindung einer Drosselspule 68 (Fig.3) und einem Steckeranschlusselement 8. Die Drossel-Bürstenanschlusselemente 11 haben an ihrem freien Ende zumindest eine Vertiefung 13, in die beispielsweise neben einem Anschlussdraht der Drosselspule 68 ein Kabel eingesteckt und eingeklemmt und eventuell noch verlötet werden kann.
Auch die Halteabschnitte 30, 33 haben bspw. an ihrem freien Ende eine Vertiefung 13, in die beispielsweise ein Anschlussdraht eingesteckt werden kann. Ein Bürstenträger 62, bspw. aus Kunststoff, Glas oder Keramik wird auf das Lagerschild aufgebracht und dort befestigt durch Kleben, Verstemmen oder im Falle des Kunststoffspritzens durch Umspritzen.
Nach dem Formen des Lagerschilds 1 und der Anschlusselemente 4, 8, 11 wird das Lagerschild zumindest teilweise mit bspw. Kunststoff umspritzt, wodurch ein Bürstenträger 62 (Fig. 3) auf dem Lagerschild 1 gebildet wird und die Anschlusselemente 4, 8, 11 teilweise von Kunststoff ummantelt werden.
Danach wird die mechanische und elektrische Verbindung der Drossel-Bürstenanschlusselemente 11 zu dem Lagerschild 1 dadurch gelöst, dass ein erstes Teilstück 27 des Drossel-Bürstenanschlusselements 11, hier gekennzeichnet durch eine gekreuzt markierte Fläche, beispielsweise durch Stanzen herausgelöst wird. Jedes Drossel-Bürstenanschlusselement 11 wird aber weiterhin durch den es umschliessenden Kunststoffmantel einteilig am Bürstenträger 62 gehalten.Die mechanische und elektrische Verbindung zwischen dem Steckeranschlusselement 8 und dem Lagerschild 1 wird ebenfalls dadurch gelöst, dass ein zweites Teilstück 36, hier gekennzeichnet durch eine gekreuzt markierte Fläche, beispielsweise herausgestanzt wird.
Die Art und Weise und wo die Verbindung zwischen Lagerschild 1 und Anschlusselementen 4 gelöst wird, hängt u.a. von der Anzahl der Anschlusselemente 4 und/oder von der Form des Bürstenträgers 62 ab. Auch die Steckeranschlusselemente 8 bleiben trotzdem weiterhin aufgrund ihrer Kunststoffummantelung einteilig mit dem Bürstenträger 62 verbunden.

Das Lagerschild 1 hat eine Längsachse 40 sowie eine Lageraufnahme 43 für ein Lager 51 (Fig.3) einer Rotorwelle 53 (Fig. 3) der Kommutatormaschine. Öffnungen 44 sind bspw. als Gewinde ausgeformt, um das Lagerschild mittels Schrauben an einer anderen Vorrichtung zu befestigen. Die Öffnungen 44 können bspw. auch als Kabeldurchführungen vorgesehen sein.

Figur 2 zeigt das Lagerschild 1 mit Anschlusselementen 4, die entsprechend ihrer späteren Anordnung gebogen worden sind. Für gleiche oder gleichwirkende Teile werden die gleichen Bezugszeichen wie in den bisherigen Figuren verwendet. Es ist zu erkennen, dass die Anschlusselemente 4, 8, 11 aus dem Lagerschild 1 herausgebildet worden sind und in diesem Verfahrensstand einteilig mit diesem sind. Die Anschlusselemente 4 können sowohl senkrecht als auch parallel zu einer Oberfläche des Lagerschilds 1 verlaufen. Die Steckeranschlusselemente 8 sind bspw. entlang fünf Biegelinien 17 verbogen worden. Zunächst verläuft das Steckeranschlusselement 8 senkrecht zur Ebene des Lagerschilds 1 als ein erster Abschnitt und dann in einem zweiten Abschnitt etwa parallel zur Ebene des Lagerschilds 1, auf den dann ein etwa U-förmig gebogener Abschnitt, dessen freies Ende in Richtung des Lagerschilds 1 zeigt und eine Steckerzunge 38 bildet, folgt. In dem Lagerschild 1 sind durch das Verbiegen der Anschlusselemente 4 Einschnitte 41 entstanden, die von den Trennungslinien 20 begrenzt werden. Diese Einschnitte 41 können durch das Aufbringen des Bürstenträgers 62 (Fig. 3) wieder verschlossen werden.

Figur 3 zeigt ein Lagerschild 1 mit Bürstenträger 62 in einem axialen Querschnitt und ausschnittsweise einen Gleichstromkleinmotor als ein Beispiel für eine Kommutatormaschine 46. Die Kommutatormaschine 46 hat ein Gehäuse 48, das stirnseitig durch das Lagerschild 1 abschlossen wird. In der im Lagerschild 1 ausgebildeten Lageraufnahme 43 ist das Lager 51 befestigt, in dem das eine Ende der Rotorwelle 53 des Kleinmotors aufgenommen ist. Wie nicht weiter dargestellt, ist das andere Ende der Rotorwelle 53 in einem weiteren Lager an einem beispielsweise zweiten Lagerschild gelagert, das die andere Stirnseite des Gehäuses 48 abdeckt. Wie weiter nicht dargestellt und an sich bekannt ist, sitzt auf der Rotorwelle 53 ein Rotor mit darin einliegender Ankerwicklung. Das Erregerfeld wird von einer Anzahl von Permanentmagneten erzeugt, die an dem zugleich den Stator darstellenden Gehäuse 48 befestigt sind. Nahe dem Lagerschild 1 ist auf der Rotorwelle 53 ein Trommelkollektor oder Kommutator mit einer Vielzahl von Kommutatorlamellen drehfest angeordnet, die über ihren einzelnen Anschlussfahnen mit der Ankerwicklung elektrisch verbunden sind. An den Trommelkommutator sind Kommutierungs- oder Kommutatorbürsten, auch Bürsten 56 genannt, mit Hilfe von vorgespannten Bürstenandruckfedern angelegt. Die Bürsten 56 und Bürstenandruckfedern sind in Bürstenköchern oder Führungsschächten 59 aufgenommen, die in etwa radialer Ausrichtung zur Kommutatorachse auf der Innenfläche des Lagerschilds 1 angeordnet sind. Von den mindestens zwei am Kommutator in etwa einander diametral gegenüberliegenden Führungsschächten 59 ist in Fig. 3 nur ein Führungsschacht 59 dargestellt. Der Führungsschacht 59 ist beispielsweise einteilig mit dem Bürstenträger 62 ausgeführt. Der Bereich um die Führungsschächte 59 herum kann aus einem hitzebeständigerem Material als der übrige Bürstenträger 62 ausgeführt sein und kann in einem Werkzeug mit dem Bürstenträger 62 hergestellt werden. Die Kommutatorbürste 56 ist über eine Bürstenanschlusslitze 65, die durch einen Längsschlitz in dem Führungsschacht 59 hindurchgeführt ist, an dem als Steckerfahne ausgebildeten elektrischen Drossel-Bürstenanschlusselement 11 angeschlossen, das von dem Material des Bürstenträgers 62 umschlossen und gehalten wird. Über die als Entstörmittel 68 dienende Drosselspule 68, die mit dem Drossel-Bürstenanschlusselement 11 elektrisch verbunden ist, führt die Verbindung von dem Drossel-Bürstenanschlusselement 11 zu dem Steckeranschlusselement 8.

Der Bürstenträger 62 ist beispielsweise beim Spritzverfahren so auf das Lagerschild 1 aufgebracht worden, dass mit dem Bürstenträger 62 die Führungsschächte 59, eine Aufnahme 72 zur Lagerung für das Entstörmittels 68, ein Anschlussstecker 75 für die äusseren elektrischen Anschlüsse (Steckerzungen 38) einstückig ausgeführt sind, d. h. in einem Arbeitsgang angespritzt worden sind. Dabei werden die Anschlusselemente 4 wie z. B. die Steckeranschlusselemente 8 und die Drossel-Bürstenanschlusselemente 11 umspritzt und ragen durch den Bürstenträger 62 hindurch.

Weiterhin ist der Bürstenträger 62 so ausgestaltet, dass er bei Anlage an das Gehäuse 48 den Innenraum des Gehäuses 48 abdichtet. Nachdem der Bürstenträger 62 auf das Lagerschild 1 aufgebracht worden ist, werden die bereits oben beschriebenen ersten und zweiten Teilstücke 27, 36 herausgestanzt. Dies kann im Falle des Teilstücks 27 des Drossel-Bürstenanschlusselements 11 auf der dem Bürstenträger 62 abgewandten Seite des Lagerschilds 1 erfolgen, ohne dass Teile des Bürstenträgers 62 mit herausgestanzt werden.
Dann wird das Entstörmittel 68 in die Aufnahme 72 eingesetzt und weitere Bauelemente wie z.B. ein Kondensator werden montiert und notwendige elektrische Verbindungen werden hergestellt. Ein Stromkreis der elektrischen Elemente auf dem Bürstenträger 62 ist bspw. wie folgt:
Ein Steckeranschlusselement 8 bildet den Pluspol und ist mit einem Entstörmittel 68 elektrisch verbunden, indem ein Anschlussdraht dieses Entstörmittels 68 in die Vertiefung 13 des Drosselvorsprungs 33 gesteckt worden ist. Dieses Entstörmittel 68 ist durch einen weiteren Anschlussdraht 79 mit dem Drossel-Bürstenanschlusselement 11 elektrisch verbunden. Das Drossel-Bürstenanschlusselement 11 ist wiederum mit der Bürstenanschlusslitze 65 elektrisch verbunden, die die Stromzufuhr für die Bürste 56 bildet. Der Strom fliesst über den Kommutator zu der anderen Bürste 56, die wiederum durch die andere Bürstenanschlusslitze 65 mit dem anderen Drossel-Bürstenanschlusselement 11 elektrisch verbunden ist.
Der Stromkreis schliesst sich jetzt, wie oben beschrieben, in umgekehrter Reihenfolge zu dem anderen Steckeranschlusselement 8.

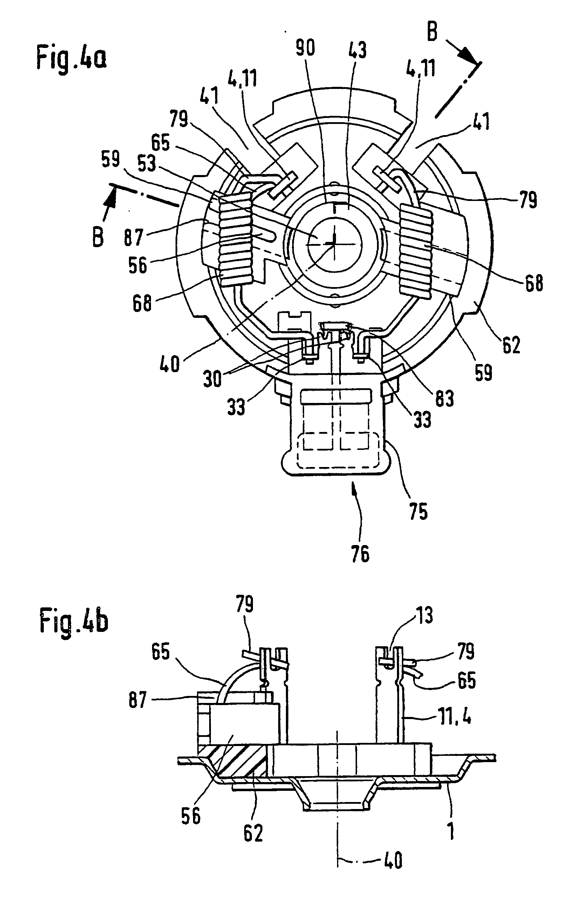

Ein Kondensator 83 (Fig. 4) verbindet bspw. die Kondensatoranschlüsse 30 der beiden Steckeranschlusselemente 8 elektrisch miteinander.
Die Drossel-Bürstenanschlusselemente 11 sind von dem Lagerschild 1 elektrisch isoliert. Ein Steckeranschlusselement 8 kann bspw. mit dem Lagerschild 1 und dem bspw. metallischen Motorgehäuse 48 elektrisch verbunden sein, indem die mechanische Verbindung nicht gelöst wird.

Figur 4a zeigt einen erfindungsgemässen Bürstenhalter 62 in Draufsicht. Zwischen den Halteabschnitten 30 ist ein Entstörmittel, z.B. ein Kondensator 83, befestigt und elektrisch kontaktiert, der bspw. Störspannungen für den Radioempfang unterdrückt. Die Drosselspule 68 ist in diesem Ausführungsbeispiel nicht in einer Aufnahme 72 angeordnet, sondern wird dadurch in seiner Lage gehalten, das sie an zwei ortsfesten Stellen 33, 11 gehalten wird. Der Führungsschacht 59 hat an einer Oberseite einen Einschnitt 87, durch den die Bürstenanschlusslitze 65 mit der Kohlebürste 56 verbunden werden kann.

Figur 4b zeigt einen Schnitt entlang der Linie B-B in Figur 4a. Die Kohlebürste 56 wird in dem Führungsschacht 59 geführt und an seiner wellenabseitigen Ende durch eine Feder (nicht gezeigt) an einen Kommutator 90 gedrückt. Bedingt durch den Verschleiss wird die Kohlebürste 56 kürzer und die Bürstenanschlusslitze 65 wird nachgeführt, wenn der Einschnitt 87 entlang einer Verschiebungsrichtung der Kohlebürsten 56 hin zur Welle 53 entsprechend ausgebildet ist.

## Patentansprüche

1. Verfahren zur Herstellung eines Lagerschilds (1) aus Metall für eine Kommutatormaschine (46), das folgende Merkmale hat:
i) das Lagerschild (1) schliesst ein Gehäuse (48) der Kommutatormaschine (46) stirnseitig ab,
ii) das Lagerschild (1) bildet für ein Lager (51) einer Rotorwelle (53) der Kommutatormaschine (46) eine Lageraufnahme (43),
iii) das Lagerschild (1) ist mit einem Bürstenträger (62) verbunden, wobei der Bürstenträger (62) folgende Merkmale hat:
der Bürstenträger (62) ist im zusammengebauten Zustand von Lagerschild (1) und Gehäuse (48) auf einer Innenfläche des Lagerschilds (1) angeordnet und elektrisch isolierend,
der Bürstenträger (62) hat Führungsschächte (59) zur verschiebbaren Aufnahme jeweils einer Kommutatorbürste (56), **dadurch gekennzeichnet, dass** zunächst aus einem Metallblech das Lagerschild (1) mit Öffnungen (44), der Lageraufnahme (43) und Anschlusselementen (4,8,11) ausgearbeitet wird, dann entlang entsprechender Trennlinien (20) um die Anschlusselemente (4) ein durch das Lagerschild (1) gehender Schlitz gebildet wird, so dass die Anschlusselemente (4) jeweils nur noch entlang einer Verbindungslinie (23) mit dem Lagerschild (1) verbunden sind, dann zumindest ein Anschlusselement (4) entlang einer Biegelinie (17) aus einer zum Lagerschild (1) parallelen Ebene, in eine gewünschte Form zur Bildung von Anschlusselementen (4,8,11) gebogen wird, wobei die Anschlusselemente (4) mit dieser Ebene einen Winkel bis zu 90° bilden, dann der Bürstenträger (62) zumindest teilweise die Anschlusselemente (4,8,11) umgreifend mit dem Lagerschild (1) verbunden wird, und dann zumindest ein Anschlusselement (4,8,11) an einem ersten Teilstück (27) durchtrennt wird, wodurch zumindest an einem Anschlusselement (4,8,11) eine direkte Verbindung zum Lagerschild (1) unterbrochen wird.

2. Verfahren zur Herstellung eines Lagerschilds (1) aus Metall für eine Kommutatormaschine (46), das folgende Merkmale hat:
i) das Lagerschild (1) schliesst ein Gehäuse (48) der Kommutatormaschine (46) stirnseitig ab,
ii) das Lagerschild (1) bildet für ein Lager (51) einer Rotorwelle (53) der Kommutatormaschine (46) eine Lageraufnahme (43),
iii) das Lagerschild (1) ist mit einem Bürstenträger (62) verbunden, wobei der Bürstenträger (62) folgende Merkmale hat:
der Bürstenträger (62) ist im zusammengebauten Zustand von Lagerschild (1) und Gehäuse (48) auf einer Innenfläche des Lagerschilds (1) angeordnet und elektrisch isolierend, der Bürstenträger (62) hat Führungsschächte (59) zur verschiebbaren Aufnahme jeweils einer Kommutatorbürste (56), **dadurch gekennzeichnet, dass** zunächst aus einem Metallblech das Lagerschild (1) mit Öffnungen (44) und der Lageraufnahme (43) ausgearbeitet wird, Anschlusselemente (4,8,11) werden ebenfalls aus einem Metallblech ausgearbeitet, dann werden die Anschlusselemente (4,8,11) mit dem Lagerschild 1 verbunden derart, dass die Anschlusselemente (4) jeweils entlang einer Verbindungslinie (23) mit dem Lagerschild (1) verbunden sind, dann zumindest ein Anschlusselement (4) entlang einer Biegelinie (17) aus einer zum Lagerschild (1) parallelen Ebene, in eine gewünschte Form zur Bildung von Anschlusselementen (4,8,11) gebogen wird, wobei die Anschlusselemente (4) mit dieser Ebene einen Winkel bis zu 90° bilden, dann der Bürstenträger (62) zumindest teilweise die Anschlusselemente (4,8,11) umgreifend mit dem Lagerschild (1) verbunden wird, und dann zumindest ein Anschlusselement (4,8,11) an einem ersten Teilstück (27) durchtrennt wird, wodurch zumindest an einem Anschlusselement (4,8,11) eine direkte Verbindung zum Lagerschild (1) unterbrochen wird.

3. Verfahren nach Anspruch 1 oder 2, **dadurch gekennzeichnet, dass** ein Anschlussgehäuse (75) mit dem Bürstenträger (62) in einem Arbeitsgang hergestellt wird.

4. Verfahren nach einem oder mehrerem der Ansprüche 1 bis 3, **dadurch gekennzeichnet, dass** der Bürstenträger (62) auf das Lagerschild (1) aus Kunststoff (2) gespritzt oder gegossen wird.

5. Verfahren nach einem oder mehreren der Ansprüche 1 bis 4, **dadurch gekennzeichnet, dass** im Bereich der Führungsschächte (59) des Bürstenträgers (62) ein hitzebeständigerer Kunststoff eingespritzt wird.

6. Verfahren nach einem oder mehreren der Ansprüche 1 bis 5, **dadurch gekennzeichnet, dass** der Bürstenträger (62) nachdem er mit dem Lagerschild (1) verbunden ist, komplett zusammengebaut wird, indem beispielsweise Entstörungsmittel (68), Bürsten (56), Bürstenanschlusslitze (65), Kondensatoren montiert werden und mit den Anschlusselementen (4,8,11) elektrisch leitend verbunden werden.

7. Lagerschild (1) aus Metall für eine Kommutatormaschine (46) hergestellt mit einem Verfahren nach einem der Ansprüche 1 bis 6, das folgende Merkmale hat:
i) das Lagerschild (1) schliesst ein Gehäuse (48) der Kommutatormaschine (46) stirnseitig ab,
ii) das Lagerschild (1) bildet für ein Lager (51) einer Rotorwelle (53) der Kommutatormaschine (46) eine Lageraufnahme (43),
iii) das Lagerschild (1) ist mit einem Bürstenträger (62) verbunden, wobei der Bürstenträger (62) folgende Merkmale hat:
der Bürstenträger (62) ist im zusammengebauten Zustand von Lagerschild (1) und Gehäuse (48) auf einer Innenfläche des Lagerschilds (1) angeordnet und elektrisch isolierend, der Bürstenträger (62) hat Führungsschächte (59) zur radial verschiebbaren Aufnahme jeweils einer Kommutatorbürste (56), wobei zumindest ein elektrisch leitendes Anschlusselement (4,8,11) für elektrische Bauteile (68) oder für Stecker (76) aus dem Lagerschild (1) gebildet ist.

## Claims

1. Method for production of an end frame (1) composed of metal for a commutator machine (46), which has the following features:
i) the end frame (1) closes a housing (48) of the commutator machine (46) at the end,
ii) the end frame (1) forms a bearing holder (43) for a bearing (51) for a rotor shaft (53) of the commutator machine (46),
iii) the end frame (1) is connected to a brush-holder support (62), with the brush-holder support (62) having the following features:
the brush-holder support (62) is arranged on an inner surface of the end frame (1), and such that it is electrically isolated, when the end frame (1) and the housing (48) are in the assembled state,
the brush-holder support (62) has guide boxes (59) for holding in each case one commutator brush (56) such that it can move, **characterized in that** the end frame (1) is first of all machined from a metal sheet with openings (44), the bearing holder (43) and connecting elements (4, 8, 11), a slot which passes through the end frame (1) is then formed along corresponding separating lines (20) around the connecting elements (4), so that the connecting elements (4) are now each connected to the end frame (1) along a connecting line (23), at least one connecting element (4) is then bent along a bending line (17) out of a plane parallel to the end frame (1) to a desired shape in order to form connecting elements (4, 8, 11), with the connecting elements (4) forming an angle of up to 90° with this plane, the brush-holder support (62) is then connected to the end frame (1), at least partially surrounding the connecting elements (4, 8, 11), and at least one connecting element (4, 8, 11) is then cut through on a first part (27), thus interrupting a direct connection to the end frame (1) on at least one connecting element (4, 8, 11).

2. Method for production of an end frame (1) composed of metal for a commutator machine (46), which has the following features:
i) the end frame (1) closes a housing (48) of the commutator machine (46) at the end,
ii) the end frame (1) forms a bearing holder (43) for a bearing (51) for a rotor shaft (53) of the commutator machine (46),
iii) the end frame (1) is connected to a brush-holder support (62), with the brush-holder support (62) having the following features:
the brush-holder support (62) is arranged on an inner surface of the end frame (1), and such that it is electrically isolated, when the end frame (1) and the housing (48) are in the assembled state, the brush-holder support (62) has guide boxes (59) for holding in each case one commutator brush (56) such that it can move, **characterized in that** the end frame (1) is first of all machined out of a metal sheet with openings (44) and the bearing holder (43), connecting elements (4, 8, 11) are likewise machined out of a metal sheet, the connecting elements (4, 8, 11) are then connected to the end frame (1) such that the connecting elements (4) are each connected to the end frame (1) along a connecting line (23), at least one connecting element (4) is then bent along a bending line (17) from a plane parallel to the end frame (1) to a desired shape in order to form connecting elements (4, 8, 11), with the connecting elements (4) forming an angle of up to 90° with this plane, the brush-holder support (62) is then connected to the end frame (1) such that it at least partially surrounds the connecting elements (4, 8, 11), and at least one connecting element (4, 8, 11) is then cut through on a first part (27), thus interrupting a direct connection to the end frame (1) on at least one connecting element (4, 8, 11).

3. Method according to Claim 1 or 2, **characterized in that** a connecting housing (75) is produced together with the brush-holder support (62) in one operation.

4. Method according to one or more of Claims 1 to 3, **characterized in that** the brush-holder support (62) is moulded or cast onto the end frame (1), which is composed of plastic (2).

5. Method according to one or more of Claims 1 to 4, **characterized in that** a relatively heat-resistant plastic is sprayed into the area of the guide boxes (59) for the brush-holder support (62).

6. Method according to one or more of Claims 1 to 5, **characterized in that** the brush-holder support (62) is assembled completely, once it has been connected to the end frame (1), by, for example, installing suppression means (68), brushes (56), brush connecting braids (65) and capacitors, and by electrically conductively connecting them to the connecting elements (4, 8, 11).

7. End frame (1) composed of metal for a commutator machine (46), produced using a method according to one of Claims 1 to 6, which has the following features:
i) the end frame (1) closes a housing (48) of the commutator machine (46) at the end,
ii) the end frame (1) forms a bearing holder (43) for a bearing (51) for a rotor shaft (53) of the commutator machine (46),
iii) the end frame (1) is connected to a brush-holder support (62), with the brush-holder support (62) having the following features:
the brush-holder support (62) is arranged on the inner surface of the end frame (1), and such that it is electrically isolated, when the end frame (1) and the housing (48) are in the assembled state, the brush-holder support (62) has guide boxes (59) for holding in each case one commutator brush (56) such that it can move, with at least one electrically conductive connecting element (4, 8, 11) for electrical components (68) or for plugs (76) being formed from the end frame (1).

## Revendications

1. Procédé de réalisation d'un flasque (1) métallique pour une machine à commutateurs (46), présentant les caractéristiques suivantes :
i) le flasque (1) isole du côté frontal un boîtier (48) de la machine à commutateurs (46),
ii) le flasque (1) forme un logement de palier (43) pour un palier (51) d'un arbre rotor (53) de la machine à commutateurs (46),
iii) le flasque (1) est reliée à un support de balais (62), le support de balais (62) présentant les caractéristiques suivantes :
à l'état monté du flasque (1) et du boîtier (48), le support de balais (62) est disposé sur une surface intérieure du flasque (1) et, isolant électriquement, le support de balais (62) a des compartiments de guidage (59) pour recevoir respectivement en déplacement un balai commutateur (56),
**caractérisé en ce que**
le flasque (1), comprenant des orifices (44), le logement de palier (43) et des éléments de connexion (4, 8,11), est d'abord façonné à partir d'une tôle métallique, puis, le long des lignes de séparation (20) correspondantes autour des éléments de connexion (4), une fente traversant le flasque (1) est formée de telle sorte que les éléments de connexion (4) soient reliés chacun au flasque (1) uniquement le long d'une ligne de liaison (23), puis au moins un élément de connexion (4) est courbé le long d'une ligne de pliage (17) à partir d'un plan parallèle au flasque (1) en une forme souhaitée pour former des éléments de connexion (4, 8, 11), les éléments de connexion (4) formant un angle jusqu'à 90° par rapport à ce plan, puis le support de balais (62) est relié au flasque (1) retenant au moins partiellement les éléments de connexion (4, 8, 11), et ensuite au moins un élément de connexion (4, 8, 11) est scindé en une première pièce partielle (27), de sorte qu'au moins une liaison directe avec le flasque (1) soit interrompue par un élément de connexion (4, 8, 11).

2. Procédé de réalisation d'un flasque (1) métallique pour une machine à commutateurs (46), présentant les caractéristiques suivantes :
i) le flasque (1) isole du côté frontal un boîtier (48) de la machine à commutateurs (46),
ii) le flasque (1) forme un logement de palier (43) pour un palier (51) d'un arbre rotor (53) de la machine à commutateurs (46),
iii) le flasque (1) est reliée à un support de balais (62), le support de balais (62) présentant les caractéristiques suivantes :
à l'état monté du flasque (1) et du boîtier (48), le support de balais (62) est disposé sur une surface intérieure du flasque (1) et, isolant électriquement, le support de balais (62) a des compartiments de guidage (59) pour recevoir respectivement en déplacement un balai commutateur (56),
**caractérisé en ce que**
le flasque (1) comprenant des orifices (44) et le logement de palier (43) est d'abord façonnée à partir d'une tôle métallique, des éléments de connexion (4, 8, 11) sont également façonnés à partir d'une tôle métallique, puis les éléments de connexion (4, 8, 11) sont reliés au flasque (1) de telle sorte que les éléments de connexion (4) soient reliés chacun au flasque (1) le long d'une ligne de liaison (23), puis au moins un élément de connexion (4) est courbé le long d'une ligne de pliage (17) à partir d'un plan parallèle au flasque (1) en une forme souhaitée pour former des éléments de connexion (4, 8, 11), les éléments de connexion (4) formant un angle jusqu'à 90° par rapport à ce plan, puis le support de balais (62) est relié au flasque (1) retenant au moins partiellement les éléments de connexion (4, 8, 11), et puis au moins un élément de connexion (4, 8, 11) est scindé en une première pièce partielle (27), de sorte qu'au moins une liaison directe avec le flasque (1) soit interrompue par un élément de connexion (4, 8, 11).

3. Procédé selon la revendication 1 ou 2,
**caractérisé en ce que**
un boîtier de connexion (75) comprenant le support de balais (62) est réalisé dans une phase de fabrication.

4. Procédé selon l'une ou plusieurs des revendications 1 à 3,
**caractérisé en ce que**
le support de balais (62) est injecté ou coulé sur le flasque (1) en matière plastique (2).

5. Procédé selon l'une ou plusieurs des revendications 1 à 4,
**caractérisé en ce qu'**
une matière plastique thermiquement stable est injectée au niveau des compartiments de guidage (59) du support de balais (62).

6. Procédé selon l'une ou plusieurs des revendications 1 à 5,
**caractérisé en ce que**
le support de balais (62) une fois relié au flasque (1), est entièrement monté pour pouvoir assembler par exemple des moyens anti-parasitage (68), des balais (56), des torons de connexion de balais (65), des condensateurs et les relier aux éléments de connexion (4, 8, 11) électriquement conducteurs.

7. Flasque (1) métallique pour une machine à commutateurs (46), fabriquée suivant un procédé selon une des revendications 1 à 6, présentant les caractéristiques suivantes :
i) le flasque (1) isole du côté frontal un boîtier (48) de la machine à commutateurs (46),
ii) le flasque (1) forme un logement de palier (43) pour un palier (51) d'un arbre rotor (53) de la machine à commutateurs (46),
iii) le flasque (1) est reliée à un support de balais (62), le support de balais (62) présentant les caractéristiques suivantes :
à l'état monté de la flasque (1) et du boîtier (48), le support de balais (62) est disposé sur une surface intérieure du flasque (1) et, isolant électriquement, le support de balais (62) a des compartiments de guidage (59) pour recevoir respectivement en déplacement radial un balai commutateur (56),
dans lequel au moins un élément de connexion électriquement conducteur (4, 8, 11) est formé à partir du flasque (1) pour des composants électriques (68) ou pour des prises électriques (76).
